# EUROPEAN PATENT APPLICATION

(11) **EP 3 073 172 A1**
(43) Date of publication of application: **28.09.2016**
(21) Application number: 16159111.0
(22) Date of filing: 08.03.2016
(51) Int. Cl.: F16L 59/02, B32B 15/00, F16L 59/04, F16L 59/08, F24F 13/02

(54) **MINERAL WOOL PRODUCT FOR FIRE AND HEAT INSULATION AND ITS MANUFACTURING METHOD**

(30) Priority: 24.03.2015 FI 20155208
(71) Applicant: Paroc Group Oy, 00180 Helsinki (FI)
(72) Inventor: HEVOSMAA, Risto, 86400 Vihanti (FI)
(74) Representative: LEITZINGER OY

(57) **Abstract**

The invention relates to a mineral wool product for fire and heat insulation and to its manufacturing method. The mineral wool product of the invention comprises first and second mineral wool layers (1, 2), each having two co-directional main surfaces. The first and second mineral wool layers (1, 2) are bonded to each other in such a way that the first mineral wool layer (1) has one of its main surfaces attached against one of the main surfaces of the second mineral wool layer (2). The mineral wool layers (1, 2) are made flexible and the second mineral wool layer (2) has its outer main surface provided with a stitch-bonded wire mesh (4) for securing the product around an object to be insulated.

## Description

### Object of the invention

The invention relates to a mineral wool product for fire and heat insulation.

The invention further relates to a method of manufacturing a mineral wool product of the invention.

### Prior art

At present, the desire to insulate a ventilation duct for both fire and heat necessitates two different insulation products to be laid on top of each other. First on the ventilation duct is installed a fire insulation consistent with fire resistance class regulations, which is often a mesh mat or mineral mat with a wire mesh on one side. The thickness of fire insulation depends on the fire resistance class. When the fire resistance class is EI30, it is possible to use e.g. the PAROC product Hvac Fire Mat AluCoat 60 mm. This mat product is secured by means of a wire mesh around a ventilation duct to be insulated. For thermal insulation, the mineral wool layers for fire protection and heat insulation have often a combined thickness of 100 mm. This entails that on top of a fire resistant mesh mat of mineral wool is laid a lighter heat insulation mat of mineral wool, e.g. the PAROC product Hvac Mat 40 mm. The mat is secured with wire and tape.

Hence, the assembler is forced to perform the installation process along with its attachments twice on one and the same duct. In addition, the coating (e.g. an aluminum foil) and the steel wire mesh of the underlying fire protection layer are materials which are unnecessary from the standpoint of insulation and increase costs.

### Description of the invention

An objective of the invention is to resolve the prior art problems. For this objective, the mineral wool product according to the invention is characterized in that it has a first and a second mineral wool layer, each having two co-directional main surfaces, the first and second mineral wool layers being attached to each other in such a way that the first mineral wool layer has one of its main surfaces attached against one of the main surfaces of the second mineral wool layer.

In one preferred embodiment for an insulation product of the invention, the first mineral wool layer has a density which exceeds that of the second mineral wool layer. The mineral wool of the mineral wool layers consists preferably of stone wool, but may also consist of glass wool or other mineral wool such as e.g. Ultimate^{®}-wool.

It is preferable that at least one of the first and second mineral wool layers be in the form of a mat with the fibers of mineral wool in a lengthwise orientation thereof being substantially co-directional with the two main surfaces of this particular mineral wool layer.

In another embodiment for an insulation product of the invention, at least one of the first and second mineral wool layers is in the form of a lamella mat with the mineral wool fibers of the lamellae in a lengthwise orientation thereof being substantially perpendicular to the two main surfaces of this particular mineral wool layer.

What is preferable in all foregoing embodiments is for the first mineral wool layer to have a density sufficient for fulfilling the fire insulation requirement with regard to an object to be insulated. What is preferable in all foregoing embodiments is for the second mineral wool layer to have a density sufficient for fulfilling the heat insulation requirement with regard to an object to be insulated.

The first mineral wool layer for an insulation product of the invention has a thickness which preferably exceeds that of the second mineral wool layer. The first and second mineral wool layers in an insulation product of the invention are preferably bonded to each other with stitches. The second mineral wool layer has its outermost main surface preferably provided with a stitch-bonded wire mesh for securing the product e.g. around a pipe.

The second mineral wool layer has one of its main surfaces preferably provided with an aluminum laminate coating or the like coating, such as e.g. a fiberglass felt.

It is preferable that the aluminum laminate coating or the like coating be topped with a wire mesh bonded with stitches to an underlying mineral wool layer for securing the product e.g. around a pipe.

On the other hand, what is characteristic in a method of the invention is that the material layers of the mineral wool product are bonded to each other in a one-time process. The material layers are stitched preferably to the attachment with each other with a fireproof wire, preferably a stainless steel wire.

A benefit and advantage of the present invention is the capability of providing fire and heat insulation for an entire duct in a single installation process. In addition, one needless coating layer will be omitted from the final result and the surface-mounted mesh facilitates installation of a fire and heat insulation, as well as usefulness of the product in a possible fire situation.

What is obtained as a benefit in a preferred embodiment of the invention with material layers stitched to attachment with each other is that a single stitching process is enough to provide fire and heat insulation for an entire duct. In addition, the wire mesh improves the final installation result in terms of heat insulation. The insulation product according to the invention can be produced as a specifically dimensioned product to comply with duct sizes.

### Detailed description of the invention

The present invention will now be described more precisely with reference to the accompanying drawings, in which:
- fig. 1: shows in a cross-section view a prior known solution for the fire and heat insulation of a ventilation duct, which is assembled on site from a separate fire insulation product and a separate heat insulation product, and

- fig. 2: shows in a cross-section view a combined fire and heat insulation product of the invention for a ventilation duct.

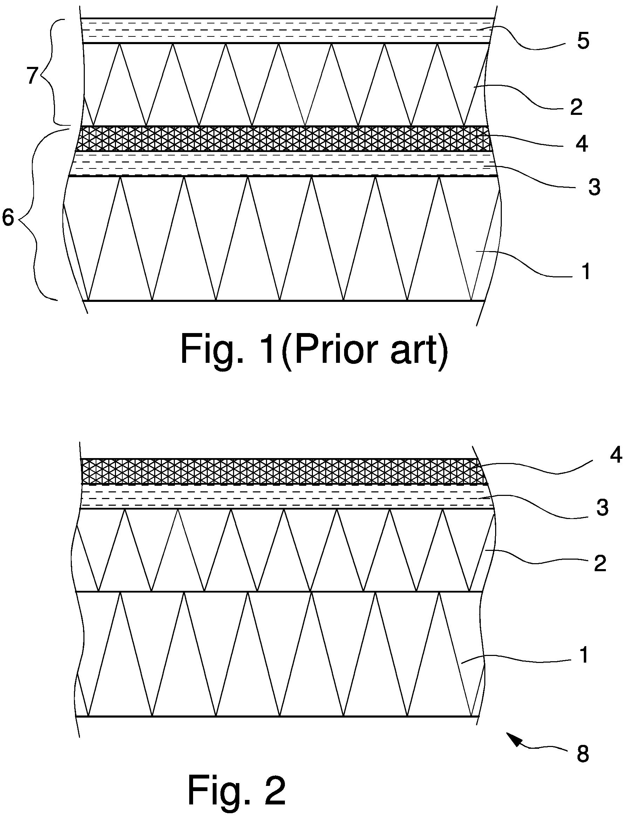

Hence, what is shown in fig. 1 is one prior known fire and heat insulation solution, which is assembled on site from a separate fire insulation product 6 and a separate heat insulation product 7. In this embodiment, the fire insulation product 6 and the heat insulation product 7 are both so-called mat products, i.e. pliable and therefore typically used for the fire and heat insulation of ventilation ducts by laying them on top of each other around a ventilation duct.

Thus, first installed on a ventilation duct is the fire insulation product 6 consistent with fire resistance class regulations, which in the embodiment shown in fig. 1 is a so-called mesh mat or mineral wool mat 1 with a wire mesh 4 on one side. Thickness of fire insulation depends on the fire resistance class. When the fire resistance class is e.g. EI30, it is possible to use e.g. the PAROC product Hvac Fire Mat AluCoat 60 mm, wherein the mineral wool is a stone wool mat with a thickness of 60 mm and a stone wool density of about 80 kg/m³. This mat type fire insulation product 6 is laid with its bare stone wool surface against a ventilation duct to be insulated and fastened thereto by means of the wire mesh 4 stitched to attachment with one main surface of the fire insulation product 6. The prior known embodiment of fig. 1 is further provided between the stone wool layer or stone wool mat 1 and the wire mesh 4 with a third material layer, which is an aluminum laminate coating 3 with a function in this case of giving a neat overall appearance to the product and also providing protection against stone wool dust.

Once the fire insulation product 6 in the form of a stone wool-constructed fire resisting mesh mat has been installed around a ventilation duct, the fire insulation product 6 is topped with a lighter stone wool mat-shaped heat insulation product 7, e.g. the PAROC product Hvac Mat 40 mm, wherein the thickness of a stone wool layer in the form of a mat 2 is 40 mm and its density is about 35 kg/m³. For the same reason as the fire insulation product 6, the heat insulation product 7 is likewise provided with an aluminum laminate coating 5 present on an outer main surface of the mat-shaped stone wool layer 2. In other words, the heat insulation product 7 is laid with its other bare main stone wool surface against the steel wire mesh 4 of the underlying fire insulation product 6. The mat type heat insulation product 7 is secured around the underlying fire insulation product 6 with wire and tape (not shown in the figure). In this prior known solution, the assembler is therefore forced to twice perform the installation work along with its attachments on one and the same duct.

The figure shows one embodiment for an insulation product 8 of the invention intended for fire and heat insulation. This insulation product 8 is a prefabricated single product with two different mineral wool layers in attachment with each other: a heavier mineral wool layer 1 fulfilling the fire resistance regulation and a lighter heat insulation layer 2 of mineral wool. Thereby is established the insulation product 8 capable of one-time installation and providing insulation from both fire and heat and having both the fire insulation layer 1 and the heat insulation layer 2 already in place.

When the fire resistance class is e.g. EI30, it is possible to make the fire insulation layer 1 e.g. of a stone wool mat having a thickness of 60 mm and a density sufficient to fulfill the fire resistance regulation, and the heat insulation layer 2 of a stone wool mat having a thickness of 40 mm and a density sufficient to fulfill the heat insulation regulation.

On the other hand, when the fire resistance class is e.g. EI60, it is possible to make the fire insulation layer 1 e.g. of a stone wool mat having a thickness of 80 mm and a density sufficient to fulfill the fire resistance regulation, and the heat insulation layer 2 of a stone wool mat having a thickness of 30 mm and a density sufficient to fulfill the heat insulation regulation.

The insulation product 8 capable of providing insulation against both fire and heat is provided not only with the fire insulation layer 1 and the heat insulation layer 2 but also with an aluminum laminate layer 3 and a steel wire mesh 4. The material layers are bonded to each other at the production plant in such a way that upon one main surface of the heavier fire insulation layer 1 is mounted the lighter heat insulation layer 2 on the other side of which are further present, as material layers, the aluminum laminate coating 3 in an innermost position and the steel wire mesh 4 in an outermost position. Thus, the fire insulation layer 1 and the heat insulation layer 2 are both in attachment with each other over one bare main surface thereof against each other.

The insulation product 8 capable of providing insulation against both fire and heat can have all of its material layers attached to each other at the production plant e.g. by stitching with stw-wire or stainless steel wire. Except for the steel wire mesh 4, the material layers 1, 2 and 3 can also be glued to attachment with each other, in which case the steel wire mesh is attached with stitches to the underlying stone wool layer/layers.

The insulation product 8 according to the invention is installed on an object to be insulated, such as e.g. around a ventilation duct, by placing it with a bare stone wool surface of the fire insulation layer 1 against and around the ventilation duct to be insulated and then secured to it by means of the wire mesh 4 stitched to attachment with one main surface of the insulation product 8.

Accordingly, the insulation solution according to the invention shown in fig. 2 differs from the prior known solution shown in fig. 1 in that fire and heat insulation for an entire duct is achieved with a single product and a single installation process. One unnecessary coating layer (aluminum laminate) is omitted from the final result. The steel wire mesh 4 present on an outer surface (one of the product's main surfaces) of the fire and heat insulation product 8 of the invention facilitates installation of the fire and heat insulation product 8. In the prior known solution of fig. 1, the steel wire mesh remains in an overlaid position between the fire insulation product 6 to be installed and the heat insulation product 7, nor can it then be utilized for bonding the outermost heat insulation product.

The aluminum laminate coating or the like coating present in the embodiment shown in fig. 2 is not an obligatory material layer. The insulation product according to the invention may also include only the fire insulation layer 1, the heat insulation layer 2 and the wire mesh 4 (e.g. a steel wire mesh). In addition, the fire insulation layer 1 and the heat insulation layer 2 may also have thicknesses and densities other than those presented in the foregoing examples, depending on the discussed fire safety class. Typical fire resistance classes are: EI15 LE100, EI30 LE100, EI60 LE100, EI90 LE100 and EI120 LE100, wherein LE100 stands for the insulation layer having a total thickness of 100 mm. The insulation thickness may also be other than 100 mm, e.g. 80 mm, 120 mm, etc.

The fire insulation layer is a product tested in accordance with a test standard (e.g. EN 13661-1). The thickness of each overall heat insulation layer is completed by topping each presently discussed fire insulation layer with a required thickness of the heat insulation product.

The present invention is not limited to the foregoing embodiments but finds a multitude of applications within the scope of protection defined in the claims.

## Claims

1. A mineral wool product for the fire and heat insulation of pipes/ducts, having a first and a second mineral wool layer (1, 2), each with two co-directional main surfaces, the first and second mineral wool layers (1, 2) being attached to each other in such a way that the first mineral wool layer (1) has one of its main surfaces attached against one of the main surfaces of the second mineral wool layer (2), **characterized in that** the mineral wool layers (1, 2) are made flexible, and that the second mineral wool layer (2) has its outer main surface provided with a stitch-bonded wire mesh (4) for securing the product around an object to be insulated.

2. A mineral wool product according to claim 1, **characterized in that** the first mineral wool layer (1) has a density which exceeds that of the second mineral wool layer (2).

3. A mineral wool product according to claim 1 or 2, **characterized in that** the mineral wool of the mineral wool layers (1, 2) consists of stone wool.

4. A mineral wool product according to any one of claims 1-3, **characterized in that** at least one of the first and second mineral wool layers (1, 2) is in the form of a mat with the fibers of mineral wool in a lengthwise orientation thereof being substantially co-directional with the two main surfaces of this particular mineral wool layer (1,2).

5. A mineral wool product according to any one of claims 1-3, **characterized in that** at least one of the first and second mineral wool layers (1, 2) is in the form of a lamella mat with the mineral wool fibers of the lamellae in a lengthwise orientation thereof being substantially perpendicular to the two main surfaces of this particular mineral wool layer (1, 2).

6. A mineral wool product according to any one of claims 1-5, **characterized in that** the first mineral wool layer (1) has a density sufficient for fulfilling the fire insulation requirement with regard to an object to be insulated.

7. A mineral wool product according to any one of claims 1-6, **characterized in that** the first mineral wool layer (2) has a density sufficient for fulfilling the heat insulation requirement with regard to an object to be insulated.

8. A mineral wool product according to any one of claims 1-7, **characterized in that** the first and second mineral wool layers (1, 2) are attached to each other with stitches.

9. A mineral wool product according to any one of claims 1-8, **characterized in that** the second mineral wool layer (2) has one of its main surfaces provided with an aluminum laminate coating (3) or the like coating, such as e.g. a fiberglass felt, on top of which lies said wire mesh (4).

10. A method of manufacturing a mineral wool product (8) according to any one of the preceding claims 1-9, said method comprising attaching the material layers of the mineral wool product to each other in a one-time process.

11. A method according to claim 10, wherein the material layers (1, 2, 3, 4) are sewed to the attachment with each other with a fireproof wire, preferably a stainless steel wire.
